Europäisches Patentamt

European Patent Office

Office européen des brevets

(19)

(11) **EP 0 699 924 B1**

(12) **EUROPEAN PATENT SPECIFICATION**

(45) Date of publication and mention
of the grant of the patent:
**06.10.1999   Bulletin 1999/40**

(51) Int Cl.[6]: **G01S 13/93**

(21) Application number: **95202033.7**

(22) Date of filing: **24.07.1995**

(54) **Vehicle obstruction discrimination system**

Hindernis-Unterscheidungssystem für Fahrzeuge

Système de discrimination d'obstacles pour véhicules

(84) Designated Contracting States:
**DE FR GB**

(30) Priority: **24.08.1994   US 295120**
**13.01.1995   US 372259**

(43) Date of publication of application:
**06.03.1996   Bulletin 1996/10**

(73) Proprietor: **DELCO ELECTRONICS
CORPORATION
Kokomo Indiana 46902 (US)**

(72) Inventors:
 • **Henderson, Mark Ford
   Kokomo, IN 46902 (US)**
 • **May, Phillip Alan
   Lompoc, CA 93436 (US)**
 • **Reed, John Christopher
   Tucson, AZ 85718 (US)**
 • **Zhang, Zhaohong
   Kokomo, IN 46902 (US)**

(74) Representative: **Denton, Michael John
   Delphi Automotive Systems
   Centre Technique Paris
   117 avenue des Nations
   B.P. 60059
   95972 Roissy Charles de Gaulle Cedex (FR)**

(56) References cited:
**EP-A- 0 544 468          WO-A-94/04941
WO-A-94/05525          US-A- 3 745 572
US-A- 5 325 097**

## Description

This invention is related to radar methods and systems for automotive hazard detection. More particularly, this invention relates to improvements in discrimination of bona fide hazardous objects from various non-hazardous objects and/or clutter commonly encountered in the typical automotive operating environment.

Many attempts at providing reliable hazardous object discrimination have been made in the field of vehicular radar systems which provide object range and relative velocity measurements thereof. The operating environment of an automotive radar system presents many challenges to the system designer, among the most troublesome being differentiation between hazardous and non-hazardous objects, both of which return transmitted radar signals. Typical non-hazardous objects include road signs, bridges, fences, guard rails and road-side burms, etc. Poor discrimination of such non-hazards from hazards of course limits the effectiveness and reliability of automotive radar systems.

Various attempts in the art have been made to remedy these radar system shortfalls. One such example of these attempts includes limiting the range and pattern width of signal transmission and reception which, in turn, also undesirably limits the area of detection. This is an especially unattractive option where, as in a vehicle blind-zone detection radar system, a relatively wide area needs to be covered. Other proposals for solving these radar system short-falls includes multiple transmitter and/or receiver configurations which, of course, add complexity and cost.

Variable transmitted radar pattern angle and range, interactive in response to steering input, have also been proposed to limit return signals from non-hazardous objects such as those which are tangential to a vehicle's travel around a curve or bend. This technique may be useful for look-ahead or look-back radar systems where radar pattern is substantially aligned with the major axis of the vehicle but does not address the problems of blind-zone radar systems where the transmission pattern is intentionally at an angle from the major axis of the vehicle.

In addition, radar systems have been proposed which use relatively complicated methods such as return signal processing to separate multipath signals in frequency bands or which consider a combination of range and a object's radial velocity with respect to the vehicle.

Another prior art system uses a side mirror mounted look-back radar system to determine the relative velocity of a object in an adjacent lane. This system requires a narrow beamwidth of $\approx 5°$ for proper coverage, which is difficult to achieve at low cost. US-A-5 325 097 discloses a method and system as specified in the preambles of Claims 1 and 8 respectively.

The present invention seeks to provide improved discrimination of objects.

According to an aspect of the present invention, there is provided a method of discriminating an object as specified in claim 1.

According to another aspect of the present invention, there is provided a vehicle radar system as specified in claim 8.

It is possible to provide a side zone vehicle radar method and system which are capable of separating various objects in proximity to the vehicle into two classes: hazardous objects and non-hazardous objects.

The preferred embodiment provides a side zone vehicle radar method and system which can warn the operator of the vehicle when a hazardous object is present in any of the detection zones of the radar and does not alarm the driver when non-hazardous objects are present in the detection zone to the radar.

The preferred system is independent of the speed of the vehicle and substantially independent of the speed of a object vehicle.

This preferred system is also capable of detecting the presence of one or more objects in proximity to a vehicle moving in a first lane of traffic, such that a object which presents a potential hazard to the-vehicle is discriminated from a object which does not present a hazard to the vehicle.

More specifically, the preferred embodiment provides a road vehicle radar system capable of detecting the presence of one or more objects in proximity to a vehicle moving at a velocity in a first lane of traffic and a method for discriminating a object which presents a hazard to the vehicle from a object which does not present a hazard to the vehicle. The preferred method includes the step of producing a radar beam having a sufficient beamwidth to illuminate a object in a second lane which is adjacent to the first lane. At least a portion of the radar beam is produced along a first axis which is perpendicular to the direction of motion of the vehicle. A reflected signal is received from an illuminated object. A velocity is estimated of the illuminated object, relative to the velocity of the vehicle, in the direction of a second axis which is parallel to the direction of motion of the vehicle based on the reflected signal. The velocity of the vehicle is measured using at least one velocity sensor. Further, the method preferably includes the steps of determining that the illuminated object is hazardous if the sum of the measured vehicle velocity and the estimated parallel object velocity is greater than a predetermined threshold, and determining that the illuminated object is not hazardous if the sum of the measured vehicle velocity and the estimated parallel object velocity is less than a predetermined threshold.

The road vehicle radar system of the preferred embodiment includes a radar signal generator and an antenna, coupled to the radar signal generator, for producing a radar beam having a sufficient beamwidth to illuminate a object in a second lane which is adjacent to the first lane. At least a portion of the radar beam is produced along a first axis which is perpendicular to the direction of motion of the vehicle. A receiver is coupled to the antenna for receiving a reflected signal from an illuminated object. Means are provided for estimating the velocity of the illuminated object in the direction of a second axis which is parallel to the direction of motion of the vehicle based on the reflected signal. A sensor is provided for measuring the velocity of the vehicle. A comparator is coupled to the estimating means and the sensor for determining that the illuminated object is hazardous if the sum of the measured vehicle velocity and the estimated parallel object velocity is greater than a predetermined threshold and for determining that the illuminated object is not hazardous if the sum of the measured vehicle velocity and the estimated parallel object velocity is less than a predetermined threshold.

An embodiment of the present invention is described below, by way of example only, with reference to the accompanying drawings, in which:

FIGURE 1 is a schematic view of a side zone car (i.e. radar vehicle) and an adjacent lane of traffic defined by dotted lines;
FIGURE 2 is a schematic view similar to Figure 1 including an obstructing car in the adjacent lane;
FIGURES 3a and 3b are schematic block diagrams of an embodiment of pulse doppler radar sensor of the system and illustrating multichannel microwave circuitry and signal processing, respectively;
FIGURE 4 is a schematic block diagram of the preferred system; and
FIGURE 5 is a graph illustrating basic object detection patterns for objects having different reflective properties using antennas with large beam widths.

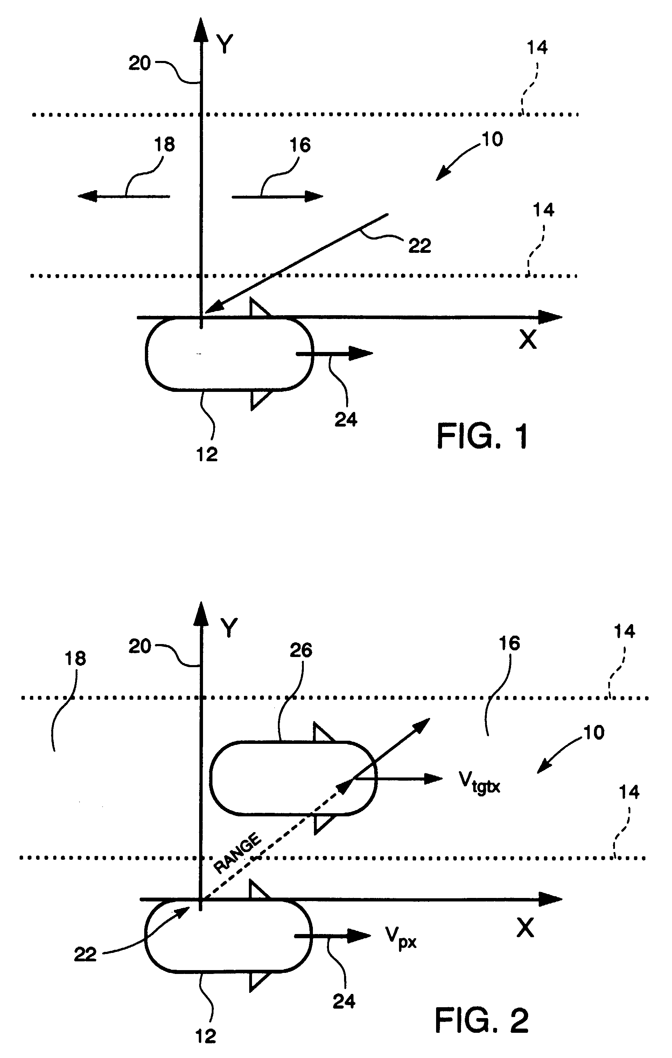

The side zone automotive radar is capable of indicating whether or not there is the presence of a hazardous object (target) in the adjacent lane of the radar vehicle by using a microwave sensor of a certain type, antenna subsystem of a certain performance, and signal processing of certain performance (all defined below). The side zone radar can detect, observe, and classify (as to hazardous or non-hazardous) objects in the platform adjacent lane within 1/10 seconds after the objects come within the detection zones of the system. The adjacent lane 10 of a vehicle 12 is shown in Figure 1 as the area between the dotted lines 14, which represent lane markers. Forward and rear zones of coverage 16 and 18, respectively, are separated by a line 20 at a radar location 22 on the vehicle 12. The line 20 (shown by "Y" axis) extends perpendicular to vehicle motion indicated by arrow 24 (along "X" axis).

The radar is able to separate various objects within the zones of coverage into two classes: hazardous objects and non-hazardous objects. The radar warns the driver of the radar vehicle 12 when a hazardous object is present in any of the detection zones of the radar, and does not warn the driver when non-hazardous objects are present in the detection zones of the radar. This discrimination is independent of the speed of the radar vehicle 12, and substantially independent of the speed of a object vehicle 26, as illustrated in Figure 2. As stated above, classification of objects is highly dependent on the direction of object motion relative to the direction of the radar vehicle 12.

The capability to discriminate between the two classes of objects eliminates numerous nuisance alarms which would be given by a system without discrimination. The reflected signals from both hazardous and non-hazardous objects (which result from the radar illuminating the objects) are similar in magnitude, in doppler frequency shift, and in range (distance to the object). As a result of these similarities, reflected signal analysis specifically designed to classify the objects is necessary in order both to detect and alarm on hazardous objects, and not to alarm on non-hazardous objects.

The elimination of alarms in the presence of non-hazardous objects greatly enhances the usefulness of a side detection system. Without discrimination, all objects in the radar detection zones cause an alarm, and the radar vehicle driver is left to discriminate between hazardous and non-hazardous objects. Since the presence of non-hazardous objects in the radar detection zones is a very common occurrence, the lack of discrimination then creates a high frequency of alarms as normal vehicle operation scenarios are encountered, even though most of the alarms do not indicate a hazardous situation.

With the feature of discrimination, a lower frequency of alarms is encountered as compared to a system without the discrimination function. The driver of the radar vehicle 12 is relieved of the discrimination task. The discriminated alarms then take on a higher importance to the radar vehicle driver since they occur only in potentially hazardous situations.

The radar may be mounted in a completely flush configuration into the side of the vehicle 12 at 22 providing an unobtrusive low cost installation. The design is such that there need be no overhang, jut, or protrusion in the smooth exterior surface of the vehicle 12 to install the radar. The radar will work within installations which do impose a protrusion to the exterior surface of the vehicle 12 with no difference in performance with respect to a flush mounted installation. The radar may be mounted anywhere on the side of the vehicle 12 such that the unit is between approximately 45 cm and 91 cm (18" and 36") above the road.

The radar may be configured to cover areas 10 forward and/or rear of the mounting location of the radar, depending on the needs of a particular application. Forward areas are those areas 16 alongside the vehicle 12 (in its adjacent lane) which are between the radar mounting location and the front of the vehicle 12. Rear areas 18 are those to the side of the vehicle 12 which are between the radar mounting location and the rear of the vehicle 12 as illustrated in Figure 1.

The radar is preferably capable of providing coverage zones which occupy 180° of (azimuth) angle with respect to its mounting location.

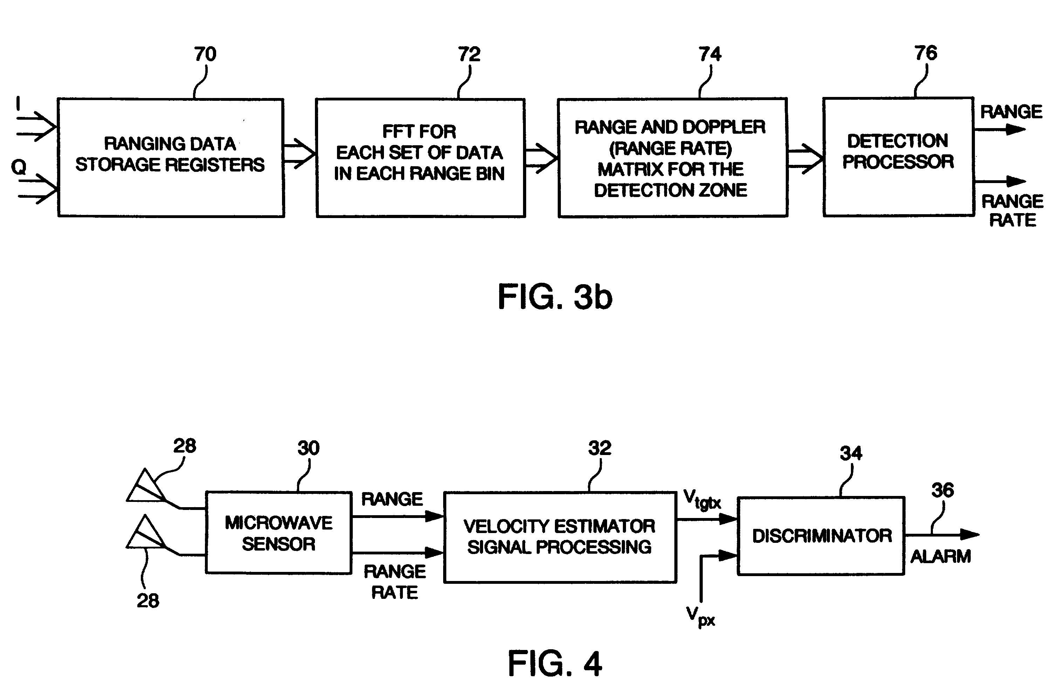

The side zone automotive radar accomplishes object discrimination by using velocity estimator signal processing (32 in Figure 4) in conjunction with low resolution antennas (28 in Figure 4) to estimate the object velocity in the "x" direction relative to the radar. This embodiment supplants high resolution antennas and relatively simple signal processing with low resolution antennas (28 in Figure 4) and more complicated signal processing to achieve cost savings while still being able to estimate object position and velocity trajectories. This can provide significant cost savings over other radar concepts primarily by eliminating the need for high azimuth resolution scanning antennas.

The object x-velocity estimate is computed by analysing a sequence of range and range rate (doppler) measurements collected over a time of less than 1/10 seconds, provided by a sensor (28 in Figure 4) in the system.

The computed object x-directed velocity $V_{tgtx}$ is relative to the radar x-directed velocity $V_{px}$. Thus, the object x-directed velocity relative to the ground is computed in the radar by adding $V_{tgtx}$ and $V_{px}$. Once this is done, classification of the object into hazardous or non-hazardous categories is done according to the criteria set forth above. If the sum $V_{px} + V_{tgtx}$ is greater than zero, the object is classified as hazardous. Oncoming traffic objects will have a $V_{tgtx}$ such that the sum $V_{tgtx} + V_{px}$ is less than zero, and that stationary objects (with respect to the ground) will have $V_{tgtx}$ = $-V_{px}$ resulting in the sum $V_{tgtx} + V_{px}$ equalling zero.

The platform velocity is known to the radar by means of accessing platform speed information commonly available in electronic form on most recent model year cars and trucks. By using the low resolution antennas 28 in concert with special signal processing, a low cost method of estimating object x-velocity is achieved.

A system block diagram is shown in Figure 4. The low resolution antennas 28 are coupled to the microwave sensor 30 which, in turn, provides the range and range rate information to a velocity estimator signal processing block 32. A discriminator 34 processes the velocity information, $V_{tgtx}$ from block 32 and the velocity information, $V_{px}$ to obtain an alarm signal on line 36. In other words, the sensor 30 using the low resolution antennas 28, collects and reports object range and range data to the "Velocity Estimator" 32. This signal processing analyses the historical range and range rate information to compute the object x-directed velocity. This object velocity is compared to the platform (radar car) speed in the discriminator 34 which makes the alarm decision.

The various components of the side zone system are described below.

The side zone automotive radar is different from conventional radars in that it does not require high resolution azimuth information from its sensor 30 in order to estimate a particular component of the object velocity (in this case the "x" component). The side zone radar requires the detection zones to be split into at least four sectors via different radiation/receive channels or antenna beam steering in the microwave sensor in order for the system to provide a full 180˙ of azimuth coverage. No one sector may transverse the line perpendicular to the radar vehicle motion at the radar location ("zero doppler line"), which is shown as the "y" axis in Figure 1. The separation of the detection area into forward and rear sectors 16 and 18 is required to resolve the sign of direction of object motion relative to the radar vehicle motion. For example (see Figure 2), a positive range rate object reported from the rear zone represents a object car 26 going in the negative X direction while a positive range rate object reported from the forward zone represents a object car 26 going in the positive X direction. The side zone radar computes $V_{tgtx}$ from a series of range and range rate measurements on the object. $V_{tgtx}$ is the x-directed object velocity relative to the side zone car or platform x-directed velocity $V_{px}$.

The rear zones and forward zones 16 and 18 may be broken into 1 or more sectors according to system coverage performance requirements. However, to cover a full 180˙ of azimuth along a side of the radar vehicle 12, at least two sectors in the forward zone 16 and two sectors in the rear zone 18 must be implemented. The azimuth resolution required by the side zone automotive radar must be no more coarse than 45˙. Wider beamwidth antennas may not be used because a crude estimate of object azimuth is needed by the velocity estimator 32 to allow the system to make a classification decision in a short amount of time after the object 26 is first detected. Using 45 degree beamwidth antennas, the side zone radar, using the velocity estimator 32 described below, makes a classification decision within 1/10 second. Antennas with 90 degree beamwidths could be used in the side zone radar, but the object x-velocity could not be accurately estimated until the object 26 was observed for longer than 1/10 second.

The low resolution antennas 28 may be realised in a great many ways. In the side zone radar, micro-strip patch radiators are used to accomplish a flush mount capability.

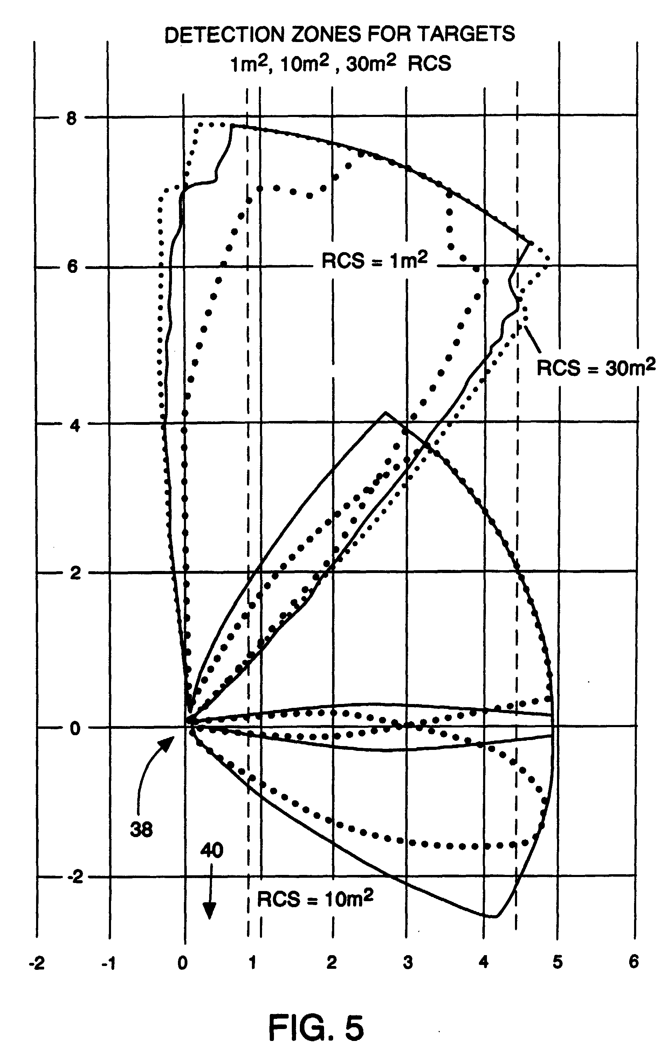

In Figure 5, basic object detection patterns are shown for objects which have differing reflective properties (RCS, i.e. Radar Cross Section) using antennas with large beamwidths. A radar location is indicated at the origin at 38 and platform motion is indicated by arrow 40. These patterns are the areas of coverage, i.e. areas where an obstructing object 26 will be detected, of one version of the side zone radar. The design here does not call for full 180˙ azimuth coverage, hence only three detection sectors are used.

The ability to use the "low resolution" antennas 28, i.e. antennas with azimuth beamwidths of up to 45 degrees, provides for small size antennas, cost savings, and mounting flexibility. The use of high resolution antennas (azimuth beamwidths on the order of 5 degrees) would provide directly measured azimuth data on the object at a high cost. The high cost of using high resolution antennas is associated with the need to cover large azimuth sectors with narrow beamwidths, requiring the antenna to be scanned, or requiring a multiplicity of antennas (and attendant microwave transceiver channels) all pointing in slightly different directions.

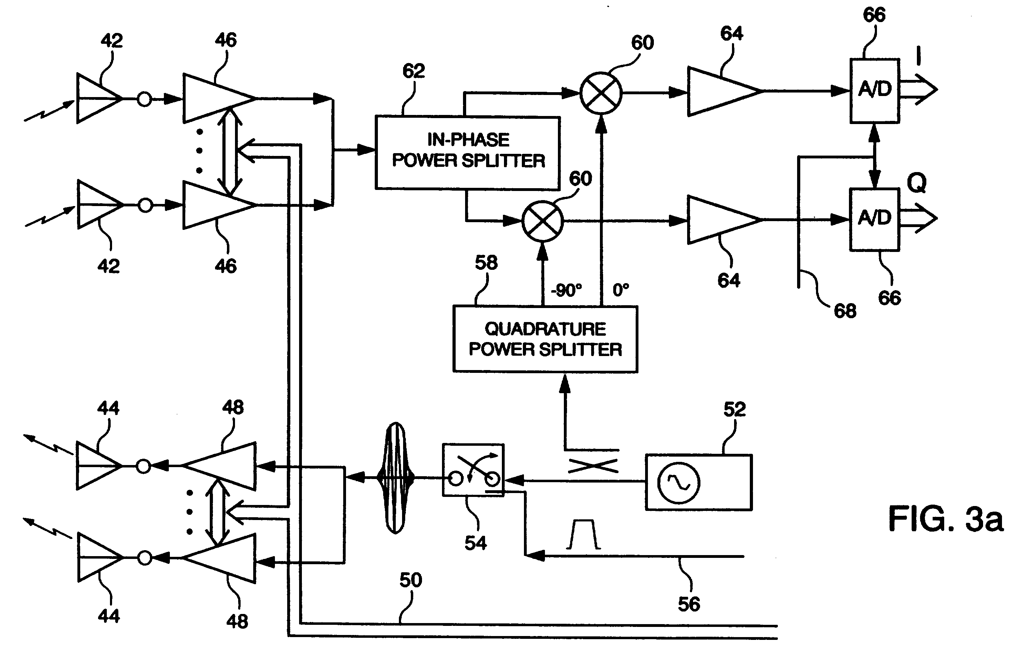

Unambiguous and accurate range and range rate data must be provided by the microwave sensor 30. As the system uses wide beamwidth (low resolution) antennas 28 which collect data from a wide azimuth angle sector, the object azimuth angle is not precisely known from the sensor data. Consequently, the object's azimuth angle (hence position and velocity) must be estimated by the velocity estimator 32 to accomplish discrimination. By analysing a series of object range and range rate measurements over time (i.e. the object range - doppler trajectory), the velocity estimator 32 computes object position and velocity. Since one set of data (azimuth and x-velocity) is estimated from a series of measured data (range and range rate), the measured data must be relatively accurate and strictly unambiguous for the velocity estimator to function properly. The range and range rate data is "unambiguous" by virtue of the fact that one object parameter measurement (say range) will not be influenced by the other object characteristic, range rate in this case. The side zone radar uses a pulse doppler radar sensor 30, block diagrams of which are shown in Figures 3a and 3b. Figure 3a illustrates an example of multichannel circuitry including receive antennas 42, transmit antennas 44, receive amplifiers 46, and power amplifiers 48 controlled by signals appearing on a channel select control bus 50. A local oscillator 52 is coupled to a switch 54 which is controlled by a pulse control signal on line 56 to provide a short duration pulse microwave signal to the amplifiers 48.

The local oscillator 52 is also coupled to a quadrature power splitter 58 which, in turn, provides signals to mixers 60. The mixers 60 also receive signals from an in-phase power splitter 62 which is coupled to the receiver amplifiers 46. The signals from the mixers 60 are coupled to video amplifiers 64 which, in turn, provide the amplified signals to A/D converters 66. The A/D converters 66 provide digital data upon receiving a sampling strobe signal on line 68.

Figure 3b shows signal processing steps for doppler data extraction. In general, during detection of the raw range and doppler information, a list of object reports is made. Each report has the object range and range rate parameters in it.

As illustrated at step 70 in Figure 3b, the digital data is stored in storage registers.

At step 72, an FFT is performed for each set of data in each range bin.

At step 74, a range and doppler matrix for the detection zone is set up.

Finally, at step 76, a detection processor provides range and range rate data.

To cover multiple zones of detection as described above, a multiplicity of transceiver channels connected to different sets of antennas are required, or it is required that the transceiver channels are switched between different sets of antennas, or it is required that the antennas are mechanically or electrically scanned. In the side zone radar, various detection zones are covered using a separate transceiver channel with individual receive and transmit antennas for each zone. The signals are ultimately multiplexed by switching ON and OFF the attendant microwave receiver and transmitter amplifiers.

The data provided by the sensor 30 must be unambiguous over a limited range of object characteristics. If the object is moving so quickly as to create doppler shifts which fall outside the radar's unambiguous doppler coverage, the estimation process must be designed to handle this case. Currently, the side zone radar unambiguous doppler coverage is set for +/- 5 Khz, representing +/- 30 meters per second (m/s) range rate. The unambiguous doppler coverage of the side zone radar may be expanded at additional cost, however, infinite unambiguous doppler coverage may not be achieved.

If a hazardous object 26 overtakes the radar vehicle 12 (or vice versa) at a rate higher than 30 m/s (60 mph), an alarm may not occur. This is expected to be a rare case, and the event happens so quickly that the alarm is of little value. Oncoming traffic (non-hazardous objects) will commonly engage the radar vehicle with negative doppler signals which are larger in magnitude than 5 Khz, thus falling outside the sensor's unambiguous doppler coverage. The velocity estimator 32 must be designed to not alarm in this case.

It is important that a history of range/range rate data sets provided by the sensor 30 be interpreted by an estimation process in order to discriminate between hazardous and non-hazardous objects. The side zone radar design requires an estimation process which computes the object's relative velocity with respect to the radar in the direction of motion of the radar vehicle 12. The estimation process must compute said object velocity from streams of range and range rate data provided by the sensor 30.

The velocity estimator 32 in the side zone radar is also a tracking filter, which enhances detection and false alarm rate performance. In order for a object to be reported (alarm generated), there must be a sequence of at least three range - doppler measurements which fall on an expected object range doppler trajectory. The object position and velocity trajectory is estimated by the first object measurement, then refined and updated as subsequent measurements are made. In this way, a filtered object measurement is accomplished while developing a object position/velocity history (i.e. a object "track").

In order to associate the numerous object reports with the appropriate trajectory predictions, a predict measurement window is computed after each measurement from the estimated object position and speed. If a measurement falls within the predict window on the next measurement cycle, that measurement is allocated to a track, the track is updated using the measurement data, and the next measurement is predicted.

Oncoming traffic type objects, when outside the unambiguous doppler coverage of the sensor 30, will have their second measurement fall outside the predicted range-doppler measurement window, thus a track will never develop. Since the track for high speed oncoming objects never gets a sequence of three associated measurements, the track is deleted, and no alarm occurs.

An alarm criterion which delineates between hazardous and non-hazardous objects should be provided. The side zone radar uses the criterion of comparing the object's relative velocity in the direction of the radar vehicle motion with the radar vehicle velocity as discussed above. The radar vehicle speed must be provided to the velocity comparison process in order to compute the object's x-directed velocity with respect to the ground, hence classify the object. There is described below in detail the algorithm used in the side zone radar for comparing platform and object x-directed velocities.

In addition to segregation between rear and forward detection zones 18 and 16, respectively, the system should have reduced detection sensitivity to objects in the region near the zero doppler line 20 (defined above and shown as the "y" axis in Figure 1). The necessity of reduced detection sensitivity for objects near the zero doppler line 20 is brought about by the need to reject geometrically distributed non-hazardous objects such as guard rails. The required reduced sensitivity in the side zone radar is accomplished in two ways: 1) by the shape of the transceiver antenna power patterns in the azimuth direction, and 2) by selectively applying a higher detection threshold to object returns whose doppler parameter is zero or near zero.

The objective of the processes described herein is to estimate the x-directed velocity of a radar object by interpreting time series of radar data vectors which have been selected to "belong to" said radar object. There are four distinct processes described below; grouped together they constitute the "tracking/estimator" algorithm. Three of these processes: predictor, estimator and initialisation, constitute an "Extended non-linear Kalman Filter" algorithm. These algorithms work interactively with the Data Association algorithm to sort incoming data (from Ghost Object processing) into sets which are associated with existing track data, and other sets which will initialise new tracks.

The radar object of interest as measured by the vehicle radar sensor is modelled as a "system" which can be characterised by a set of state variables. These variables are based on physical equations of motion where the "system" (object) model is by no means unique. The system model must be adequate to serve the application. The estimator infers the values of certain object state variables, even though the microwave sensor assembly measures only non-linear combinations of these variables. The measurement and state vectors are:

$$\bar{z} = \begin{bmatrix} r \\ \dot{r} \end{bmatrix} \quad \bar{x} = \begin{bmatrix} \dot{x} \\ x \\ y \end{bmatrix} = \begin{bmatrix} x_1 \\ x_2 \\ x_3 \end{bmatrix} \qquad (1)$$

where r and dr/dt are the variables which the radar measures (range and range rate), $x_1$, $x_2$, and $x_3$ are the state variables which model the state (x-velocity and position) of the object. The tracking/estimator computes the object state from time series of object measurements.

The object state equations of motion are:

$$\dot{\bar{x}} = [F] \cdot \bar{x} \qquad (2)$$

where F is the state differential equation matrix and is:

6

$$[F] \;=\; \begin{bmatrix} 0 & 0 & 0 \\ 1 & 0 & 0 \\ 0 & 0 & 0 \end{bmatrix} \tag{3}$$

The system measurement equation is:

$$\vec{z} = h(\vec{x}) + \vec{v} = \begin{bmatrix} \sqrt{x_2^2 + x_3^2} \\[2mm] \dfrac{x_1 x_2}{\sqrt{x_2^2 + x_3^2}} \end{bmatrix} + \vec{v} \tag{4}$$

where $h(\vec{x})$ is a non-linear vector function of a vector and $\vec{v}$ is a normal random variable vector with covariance R which characterises the noise accompanying the measurement.

In order to infer the state of the object from the measurements, a state estimate is initialised after the first measurement and updated after every ensuing measurement. As the sequence of measurements becomes longer, the estimated state vector becomes closer to the actual state vector of the object. There are a number of variables involved, but there are two which must be computed just prior to and just after a measurement. These are the state vedtor estimate and the state error covariance matrix P. The following symbols are defined:

$\vec{x}_k(+) =$      the state vector estimate after a measurement at time t=k;

$\vec{x}_k(-) =$      the state vector estimate prior to a measurement at time t=k;

$P_k(-) =$      the error covariance matrix just prior to a measurement at time t=k;

$P_k(+) =$      the error covariance matrix just after a measurement at time t=k.

The tracking/estimator operates by computing an initial estimate from the first measurement point via the initialisation routine which is $x_0(+)$. At this point, "the track has been initialised". Upon the next measurement, $x_1(-)$ is computed by the predictor, then $x_1(+)$ is computed by the estimator. A "track file" is retained in memory which consists of the variables described above, with two additional variables:

tolm      the time of the last measurement, and
count      the number of input data (measurements) which have been associated with the track, and processed by the estimator.

The predictor/estimator processes are repeated for every subsequent measurement until there are too many "missed" consecutive measurements, at which point the variables defined above are deleted from memory, i.e. "the track is deleted". Both the state vector x and the error covariance P must be updated by the predictor and the estimator.

Algorithm Subroutine Definitions

Predictor: uses currently existing state estimate as determined after a measurement at time k to compute the state vector estimate and covariance matrix just prior to a measurement at time k+1. As a result of the nature of the data association algorithm, only parts of the general predictor algorithm are executed at any particular time, thus the general predictor will be broken down into two subroutines:
predictor_1:

$$\hat{x}_k \ (-) \ = \ \Phi \hat{x}_{k-1}(+)$$

$$= \begin{bmatrix} 1 & 0 & 0 \\ \Delta t & 1 & 0 \\ 0 & 0 & 1 \end{bmatrix} \begin{bmatrix} \hat{x}_{1k-1}(+) \\ \hat{x}_{2k-1}(+) \\ \hat{x}_{3k-1}(+) \end{bmatrix} \tag{5a}$$

$$= \begin{bmatrix} \hat{x}_{1k-1}(+) \\ \Delta t \hat{x}_{1k-1}(+) \ + \ \hat{x}_{2k-1}(+) \\ \hat{x}_{3k-1}(+) \end{bmatrix}$$

$$\vec{z}_p = h \ (\hat{\vec{x}}_k \ (-)) \tag{5b}$$

$\Delta t =$ time difference between the current and previous measurement = time - tolm.

Predictor_2:

$$P_k(-) = \Phi P_{k-1}(+) \Phi^T \tag{6}$$

Input Data

time: real number which is part of the input data vector and is the time of measurement of said vector.
Data Source: Ghost Target output data via Data Association.
tolm: real number which is part of the input data vector and is the time of measurement of the previous data.
Data Source: track_file via Data Association.
$x_{k-1}(+)$: current state estimate vector as updated by the estimator at the previous measurement time.
Data Source: track_file via Data Association.
$P_{k-1}(+)$: current value of the state estimate error covariance matrix as updated by the estimator at the previous measurement time.
Data Source: track_file via Data Association.

Output Data

$x_k(-)$: predicted value of the state vector at the current measurement time.
Data Destination: track_file via Data Association.
$P_k(-)$: predicted value of the error covariance matrix at the current measurement time.
Data Destination: track_file via Data Association.
$z_p$: predicted measurement vector [r, dr/dt] as computed from the predicted state vector.
Data Destination: Data Association.
Estimator: uses the time updated state estimate and covariance matrix to compute a new state estimate and covariance matrix as influenced by the most recent measurement.

$$\hat{x}_k \ (+) \ = \ \hat{x}_k \ (-) \ + \ K_k [\vec{z}_k - h_k(\hat{\vec{x}}_k \ (-))] \tag{7}$$

where

$$K_k = P_k(-) H_k^T \left[ H_k P_k(-) H_k^T + R_k \right]^{-1} \qquad (8)$$

The covariance matrix update is

$$P_k(+) = \left[ I - K_k H_k \right] P_k(-) \qquad (9)$$

The h function matrix is defined in Equation (4); its argument for the estimate update, Equation (7), is the predictor estimate as given by Equation (5) from the previous measurement. The H matrix which is needed for Equations (8) and (9) is a function matrix with an argument explicitly:

$$H_k = H(\hat{\tilde{x}}_k \; (-)) \qquad (10)$$

This function is defined as:

$$H(\hat{\tilde{x}}) = \begin{bmatrix} 0 & \dfrac{x_2}{\sqrt{x_2^2 + x_3^2}} & \dfrac{x_3}{\sqrt{x_2^2 + x_3^2}} \\[3ex] \dfrac{x_2}{\sqrt{(x_2^2 + x_3^2)}} & \dfrac{x_1}{\sqrt{x_2^2 + x_3^2}}\left(1 - \dfrac{x_2^2}{x_2^2 + x_3^2}\right) & \dfrac{-x_1 x_2 x_3}{\sqrt{x_2^2 + x_3^2}\,(x_2^2 + x_3^2)} \end{bmatrix} \qquad (11)$$

Whenever this function is evaluated, its argument is the state estimate as computed by the predictor.

Input Data

| | |
|---|---|
| $x_k(-)$: | predicted value of the state vector at the current measurement time. |
| Data Source: | track_file via Data Association. |
| $P_k(-)$: | predicted value of the error covariance matrix at the current measurement time. |
| Data Source: | track_file via Data Association. |
| R: | measurement noise covariance matrix (2x2). A diagonal matrix thus only $r_{11}$ and $r_{22}$ need be stored - real numbers. |
| Data Source: | System memory. |
| $z_k$: | input measurement vector. |
| Data Source: | Data Association. |

Output Data

| | |
|---|---|
| $x_k(+)$: | current state estimate vector. |
| Data Destination: | track_file via Data Association. |
| $P_k(+)$: | current value of the state estimate error covariance matrix. |
| Data Destination: | track_file via Data Association. |

Initialisation: uses "first" measurement data point to estimate the state vector according to the zone, range, and range rate which originates the first measurement.

Input Data

| $z_k$: | input vector [r, dr/dt, zone] = [$z_{k1}$, $z_{k2}$, $z_{k3}$] |
|---|---|
| Data Source: | Data Association |
| rlimit: | real number to be compared to the measured range ($z_{k1}$), |
| Data Source: | System memory |
| yeo: | real number which is used as the initial y estimate under certain circumstances, |
| Data Source: | System memory |
| fx: | real number, |
| Data Source: | System memory |
| fy: | real number, |
| Data Source: | System memory |
| fxdot: | real number, |
| Data Source: | System memory |
| cx: | real number, |
| Data Source: | System memory |
| cy: | real number, |
| Data Source: | System memory |
| cxdot: | real number, |
| Data Source: | System memory |
| cx_2: | real number, |
| Data Source: | System memory |
| cy_2: | real number, |
| Data Source: | System memory |
| cxdot_2: | real number, |
| Data Source: | System memory |
| rxdot_1: | real number, |
| Data Source: | System memory |
| rxdot_2: | real number, |
| Data Source: | System memory |
| rx: | real number, |
| Data Source: | System memory |
| ry: | real number, |
| Data Source: | System memory |

Output Data

| $x_k$(+): | output initial state estimate [x_dot$_{est}$, x$_{est}$, y$_{est}$] |
|---|---|
| Data Destination: | Data Association |

Processing:

If $z_{k3}$ =                    "forward" then

$x_{est}$ = fx $z_{k1}$

$y_{est}$ = fy $z_{k1}$

x_dot$_{est}$ = fxdot $z_{k2}$.


If $z_{k3}$ =                    "centre" then

    If $z_{k2}$<=    0 then

$x_{est}$ = cx $z_{k1}$

$y_{est}$ = cy $z_{k1}$

x_dot$_{est}$ = cxdot $z_{k2}$,

else          ($z_{k2}$ > 0)

$x_{est}$ = cx_2 $z_{k1}$

$y_{est}$ = cy_2 $z_{k1}$

x_dot$_{est}$ = cxdot_2 $z_{k2}$.


If $z_{k3}$ =                    "rear" then

    If $z_{k1}$ >  rlimit then

x_dot$_{est}$ + rxdot_1 $z_{k2}$

$y_{est}$ = yeo

$x_{est}$ = -Sqrt$[z_{k1}^2 - y_{est}^2]$

else

x_dot$_{est}$ = rxdot_2 $z_{k2}$

$x_{est}$ = rx $z_{k1}$

$y_{est}$ = ry $z_{k1}$.


Data Association:

This routine organises the operation of the subroutines described above. It makes decisions about which incoming data are to be associated with existing trackfiles. It creates trackfiles, maintains (updates) the trackfile data, and deletes trackfiles.

Input Data

| | |
|---|---|
| submissions: | groups of object reports, each report is a four element vector: [range (real), range_rate (real), time (real), zone (index)] |
| Data Source: | Ghost Object processor |
| rtolerp: | real number - the size of the difference between a predicted range and measured range is tested against this number for decision making |

| Data Source: | System memory |
| --- | --- |
| rdottolerp: | real number - the size of the difference between a predicted range rate and measured range rate is tested against this number for decision making |
| Data Source: | System memory |
| nrprts: | integer number - the maximum number of reports processed by the tracking estimator which are counted |
| Data Source: | System memory |
| maxtracks: | integer number - the maximum number of trackfiles which will be maintained and processed by the system |
| Data Source: | System memory |
| mssdrprts: | integer number - the number of consecutive missed reports required to delete a trackfile. |
| Data Source: | System memory |
| deltatmax: | real number, units of msec - the maximum allowable time between consecutive reports associated with a particular track which will preserve the track |
| Data Source: | System memory |
| p11, p22, p33: | The diagonal elements of the $P_0$ matrix, all other elements are zero, used for initialising a track, real numbers |
| Data Source: | System memory |

Output Data

| track_files: | a set of data groups (each group being a track_file) which retain the "memory" of the Kalman filter processes currently running. Each track_file contains the current object state estimate and covariance matrix: $x_k(+)$, $P_k(+)$, the current number of associated reports processed by the estimator/predictor/ initialisation, designated count, and the time of last measurement, tolm. count takes on values between 0 and nrprts. |
| --- | --- |

Processing

Data association is a group of sorting and testing routines. It accomplishes its objective of getting he right data to the right processes by operating predictor_1 and performing comparisons between the predictor output and the incoming data. Depending on the outcome, either the estimator or the initialisation are called to process the input (radar measurement) data. An internal variable: "numbr_of_tracks" keeps count of the number of currently active tracks, and is set to 0 upon radar initialisation (@ power up).

For each track_file$_i$, a list of data which belongs to the track is built, referred to as "input$_i$". The following is performed in the given sequence:

0) Initialise the routine by creating a temporary variable tmax = 0, and setting all the input$_i$ to NULL.

1) For each existing track_file "i", compare all the input data reports "j" (i.e. each member of submissions) to test for the attribute of submission$_j$ "belonging" to track$_i$.

1a) read $z_k$ = [range, range_dot] and time from submission$_j$ and tolm from track_file$_i$, compute time - tolm = dt, if time > tmax, then tmax = time,

1b) execute predictor_1(dt), returning $z_p$ and $x_k(-)$,

1c) compute $|z_k - z_p| = z_{diff}$,

1d) if $z_{diff}[1]$ < rtolerp and $z_{diff}[2]$ < rdotto-lerp -- create the data set [$z_k$, $x_k(-)$, dt, $z_{diff}$, time] and append this to input$_i$ (the data list associated with track_file$_i$), -- mark submission$_j$ as having been associated.

2) For each input$_i$ with one or more data set, select the set with the smallest $|z_{diff}|$, then execute predictor_2 using $P_{k-1}(+)$ from track_file$_i$, dt from input$_i$, and update the track_file$_i$ with the new $P_k(-)$ and $x_k(-)$.

3) For each track_file$_i$:

If input$_i$ not equal to NULL, execute the estimator, increment the track_file$_i$ count by 1 if the count is less than nrprts, replace track_file$_i$ tolm with time, and update the trackfile data with the estimator outputs $x_k(+)$ and $P_k(+)$.

If input$_i$ equals NULL,

If track_file$_i$ count > 1,

decrement the track_file$_i$ count by 1 else do not decrement the track_file$_i$ count

If tmax - tolm > deltatmax delete the trackfile and decrement numbr_of_tracks by one

else do not delete the trackfile.

4) For all submissions which were not associated with any of the track_files, order the group according to the following priorities:

rear zone r_dot < 0

highest |r_dot|

centre zone r_dot < 0

highest |r_dot|

forward zone r_dot < 0

highest |r_dot|

centre zone r_dot > 0

lowest |r_dot|

forward zone r_dot > 0

lowest |r_dot|

rear zone r_dot > 0

lowest |r_dot| call initialisation and increment num_of_tracks by 1 for each of the ordered submissionsj until num_of_tracks = maxtracks. Form a track_file with the initialisation output for $x_k(+)$, $P_0$ for $P_k(+)$, dummy values for $x_k(-)$ and $P_k(-)$, time for tolm, set count to 1.

delete all remaining submissions

End of Data Association

Computational Notes

The state estimate time update equation (5) can be computed by updating only the estimated x position of the object ($x_2$); both the y estimate ($x_3$) and the dx/dt estimate ($x_1$) remain unchanged for a time update.

The state error covariance matrix P is a symmetrical matrix in every case. Therefore, only six of the nine elements must be explicitly calculated.

The measurement noise covariance matrix R is a diagonal matrix which saves computations. Since R is a 2 x 2, the matrix inversion size is 2 x 2.

Discrimination Method

The discrimination algorithm compares the speed of the side zone radar vehicle (platform) with the various available object x-directed velocities as given by the Track-ing/Estimator trackfiles. The first element of each existing trackfile is the object state estimate: [x_dot, x, y]. Each x_dot is compared with the radar vehicle speed to make an alarm decision.

Input Data

| | |
|---|---|
| vpx: | SDS vehicle platform speed |
| Data Source: | System Control Module |
| vpxo: | real number |
| Data Source: | System Memory |
| m: | real number |
| Data Source: | System Memory |
| b: | real number |
| Data Source: | System Memory |
| x_dot: | set of x_dot components of the various track_file data |
| Data Source: | track_files via Data Association |
| count: | set of count components of the various track_file data |
| Data Source: | track_files via Data Association |
| nrprts: | integer number - the maximum number of reports processed by the tracking/estimator which are counted |
| Data Source: | System Memory |
| mssdrprts: | integer number - the number of consecutive missed reports required to delete a track_file |
| Data Source: | System Memory |

Output Data

alarm: Logical signal level indicating whether or not to indicate a object in the system display
Data Destination: System Output

Processing

Process all of the available track_files data in the following way:

```
For vpx >= vpxo,
If any of the x_dot are such that:
        x_dot > -vpx + m(vpx - vpxo) + b
AND
        count > nrprts - mssdrprts
set alarm = TRUE
ELSE
set alarm = FALSE.


For vpx < vpxo,
If any of the x_dot are such that:
        x_dot > -vpx + b
AND
count > nrprts - mssdrprts
set alarm = TRUE
ELSE
set alarm = FALSE.
end.
```

## Claims

1. A method of discriminating an object (26) which presents a hazard to the vehicle (12) from an object which does not present a hazard to the vehicle in a road vehicle radar system capable of detecting the presence of one or more objects in proximity to a vehicle (12) moving in a first lane of traffic; the method comprising the steps of producing a radar beam having a sufficient beam-width to irradiate an object (26) in a second lane (10) adjacent to the first lane, at least a portion of the radar beam being produced along a first axis (20) substantially perpendicular to the direction of motion of the vehicle (12); and receiving a reflected signal from an irradiated object; characterised by estimating from the received reflected signal the velocity of the irradiated object relative to the velocity of the vehicle in the direction of a second axis (x) substantially parallel to the direction of motion of the vehicle; measuring the velocity of the vehicle using at least one velocity sensor; determining that the irradiated object is hazardous if the sum of the measured vehicle velocity and the estimated parallel object velocity is greater than a predetermined threshold; and determining that the irradiated object is not hazardous if the sum of the measured vehicle velocity and the estimated parallel object velocity is less than a predetermined threshold.

2. A method according to claim 1, wherein the step of producing a radar beam uses a radar antenna (28) which is mounted flush to at least one side of the vehicle (12).

3. A method according to claim 1 or 2, wherein the step of estimating includes using a Kalman filter.

4. A method according to claim 3, wherein the Kalman filter is an extended nonlinear Kalman filter.

5. A method according to claim 3 or 4, wherein the Kalman filter includes the step of calculating an initial estimate for one or more state variables which describe the motion of the object (26) at a time t0, based on a measured value from the received signal at time t0.

6. A method according to claim 5, wherein the Kalman filter includes the steps of predicting a value for the one or more states at a time tn+1, based on an estimate for the one or more state variables at a previous time tn, wherein the estimate for the one or more state variables at time tn is calculated from a measured value from the received signal at time tn and from a prediction of a value of the one or more states at time tn.

7. A method according to any preceding claim, comprising the step of generating an alarm signal if the object is determined to be hazardous.

8. A vehicle radar system for detecting the presence of one or more objects (26) in proximity to a vehicle (12) moving in a first lane of traffic, and for discriminating an object which presents a hazard to the vehicle from an object which does not present a hazard to the vehicle, the system comprising a radar signal generator (52, 54); an antenna (44), coupled to the radar signal generator for producing a radar beam having a sufficient beamwidth to irradiate an object in a second lane adjacent the first lane, at least a portion of the radar beam being produceable along a first axis (20) substantially perpendicular to the direction of motion of the vehicle; and a receiver (46, 62) coupled to the antenna for receiving a reflected signal from an irradiated object; characterised by estimating means (32) for estimating from the received reflected signal the velocity of the irradiated object in the direction of a second axis (x) substantially parallel to the direction of motion of the vehicle; a sensor for measuring the velocity of the vehicle; and a comparator coupled to the estimating means and the sensor for determining that the irradiated object is hazardous if the sum of the measured vehicle velocity and the estimated parallel object velocity is greater than a predetermined threshold and for determining that the irradiated object is not hazardous if the sum of the measured vehicle velocity and the estimated parallel object velocity is less than a predetermined threshold.

9. A system according to claim 8, wherein the beamwidth of the radar beam is greater than 5-10 degrees.

10. A system according to claim 8 or 9, wherein the antenna (42, 44) is designed to be mounted flush to at least one side of a vehicle.

11. A system according to claim 8, 9 or 10, wherein the estimating means includes a Kalman filter.

12. A system according to claim 11, wherein the Kalman filter is an extended nonlinear Kalman filter.

13. A system according to claim 11 or 12, wherein the Kalman filter includes means for calculating an initial estimate for one or more state variables which describe the motion of the object at a time t0, based on a measured value from the received signal at time t0.

14. A system according to claim 13, wherein the Kalman filter includes means for predicting a value for the one or more states at a time tn+1 based on an estimate for the one or more state variables at a previous time tn, wherein the estimate for the one or more state variables at time tn is calculated from a measured value from the received signal at time tn and from a prediction of a value of the one or more states at time tn.

15. A system according to any one of claims 8 to 14, comprising means for generating an alarm signal if the object is determined to be hazardous.

**Patentansprüche**

1. Verfahren zum Unterscheiden eines Objektes (26), das eine Gefahr für das Fahrzeug (12) darstellt, von einem Objekt, das keine Gefahr für das Fahrzeug darstellt, in einem Radarsystem eines Straßenfahrzeuges, das in der Lage ist, die Anwesenheit von einem oder mehreren Objekten in der Nähe eines Fahrzeuges (12) zu detektieren, das sich in einer ersten Verkehrsfahrbahn bewegt; wobei das Verfahren die Schritte umfaßt, daß ein Radarstrahl mit einer ausreichenden Strahlbreite erzeugt wird, um ein Objekt (26) in einer zweiten Fahrbahn (10) neben der ersten Fahrbahn zu bestrahlen, wobei mindestens ein Teil des Radarstrahls entlang einer ersten Achse (20) erzeugt wird, die im wesentlichen senkrecht zur Bewegungsrichtung des Fahrzeuges (12) steht; und daß ein von einem bestrahlten Objekt reflektieres Signal empfangen wird,

dadurch **gekennzeichnet,**

daß aus dem empfangenen reflektierten Signal die Geschwindigkeit des bestrahlten Objekts relativ zur Geschwindigkeit des Fahrzeuges in Richtung einer zweiten Achse (x) abgeschätzt wird, die im wesentlichen parallel zur Bewegungsrichtung des Fahrzeuges liegt; daß die Geschwindigkeit des Fahrzeuges unter Verwendung mindestens eines Geschwindigkeitssensors gemessen wird; daß festgestellt wird, daß das bestrahlte Objekt gefährlich ist, wenn die Summe aus der gemessenen Fahrzeuggeschwindigkeit und der abgeschätzten Parallelobjektgeschwindigkeit größer als eine vorherbestimmte Schwelle ist; und daß festgestellt wird, daß das bestrahlte Objekt ungefährlich ist, wenn die Summe aus der gemessenen Fahrzeuggeschwindigkeit und der abgeschätzten Parallelobjektgeschwindigkeit kleiner als eine vorherbestimmte Schwelle ist.

2. Verfahren nach Anspruch 1, wobei der Schritt des Erzeugens eines Radarstrahls eine Radarantenne (28) verwendet, die bündig an mindestens einer Seite des Fahrzeuges (12) angebracht ist.

3. Verfahren nach Anspruch 1 oder 2, wobei der Schritt des Abschätzens die Verwendung eines Kalman-Filters umfaßt.

4. Verfahren nach Anspruch 3, wobei das Kalman-Filter ein erweitertes, nichtlineares Kalman-Filter ist.

5. Verfahren nach Anspruch 3 oder 4, wobei das Kalman-Filter den Schritt umfaßt, daß eine Anfangsabschätzung für eine oder mehrere Zustandsvariablen, welche die Bewegung des Objektes (26) zu einem Zeitpunkt t0 beschreiben, auf der Grundlage eines gemessenen Wertes von dem empfangenen Signal zum Zeitpunkt t0 berechnet wird.

6. Verfahren nach Anspruch 5, wobei das Kalman-Filter die Schritte umfaßt, daß ein Wert für den einen oder die mehreren Zustände zu einem Zeitpunkt tn+1 auf der Grundlage einer Abschätzung für die eine oder die mehreren Zustandsvariablen zu einem vorhergehenden Zeitpunkt tn vorhergesagt wird, wobei die Abschätzung für den einen oder die mehreren Zustandsvariablen zum Zeitpunkt tn aus einem gemessenen Wert von dem empfangenen Signal zum Zeitpunkt tn und aus einer Vorhersage eines Wertes des einen oder der mehreren Zustände zum Zeitpunkt tn berechnet wird.

7. Verfahren nach einem der vorhergehenden Ansprüche mit dem Schritt, daß ein Alarmsignal erzeugt wird, wenn festgestellt wird, daß das Objekt gefährlich ist.

8. Fahrzeugradarsystem zum Detektieren der Anwesenheit von einem oder mehreren Objekten (26) in der Nähe eines Fahrzeuges (12), das sich in einer ersten Verkehrsfahrbahn bewegt, und zum Unterscheiden eines Objekts, das eine Gefahr für das Fahrzeug darstellt, von einem Objekt, das keine Gefahr für das Fahrzeug darstellt, wobei das System umfaßt einen Radarsignalgenerator (52, 54); eine Antenne (44), die an den Radarsignalgenerator angekoppelt ist, um einen Radarstrahl mit einer ausreichenden Strahlbreite zu erzeugen, um ein Objekt in einer zweiten Fahrbahn neben der ersten Fahrbahn zu bestrahlen, wobei mindestens ein Teil des Radarstrahls entlang einer ersten Achse (20) erzeugbar ist, die im wesentlichen senkrecht zur Bewegungsrichtung des Fahrzeuges steht; und einen Empfänger (46, 62), der an die Antenne angekoppelt ist, um ein von einem bestrahlten Objekt reflektiertes Signal zu empfangen;

**gekennzeichnet** durch

ein Abschätzmittel (32), um aus dem empfangenen reflektierten Signal die Geschwindigkeit des bestrahlten Objekts in Richtung einer zweiten Achse (x) abzuschätzen, die im wesentlichen parallel zur Bewegungsrichtung des Fahrzeuges liegt; einen Sensor, um die Geschwindigkeit des Fahrzeuges zu messen; und einen Komparator, der an das Abschätzmittel und den Sensor angekoppelt ist, um festzustellen, daß das bestrahlte Objekt gefährlich ist, wenn die Summe aus der gemessenen Fahrzeuggeschwindigkeit und der abgeschätzten Parallelobjektgeschwindigkeit größer als eine vorherbestimmte Schwelle ist, und um festzustellen, daß das bestrahlte Objekt ungefährlich ist, wenn die Summe aus der gemessenen Fahrzeuggeschwindigkeit und der abgeschätzten Parallelobjektgeschwindigkeit kleiner als eine vorherbestimmte Schwelle ist.

9. System nach Anspruch 8, wobei die Strahlbreite des Radarstrahls größer als 5-10 Grad ist.

10. System nach Anspruch 8 oder 9, wobei die Antenne (42, 44) derart konstruiert ist, daß sie bündig an mindestens einer Seite eines Fahrzeuges angebracht sein kann.

11. System nach Anspruch 8, 9 oder 10, wobei das Abschätzmittel ein Kalman-Filter umfaßt.

12. System nach Anspruch 11, wobei das Kalman-Filter ein erweitertes, nichtlineares Kalman-Filter ist.

13. System nach Anspruch 11 oder 12, wobei das Kalman-Filter ein Mittel umfaßt, um eine Anfangsabschätzung für eine oder mehrere Zustandsvariablen, welche die Bewegung des Objektes zu einem Zeitpunkt t0 beschreiben, auf der Grundlage eines gemessenen Wertes von dem empfangenen Signal zum Zeitpunkt t0 zu berechnen.

14. System nach Anspruch 13, wobei das Kalman-Filter ein Mittel umfaßt, um einen Wert für den einen oder die mehreren Zustände zu einem Zeitpunkt tn+1 auf der Grundlage einer Abschätzung für die eine oder die mehreren Zustandsvariablen zu einem vorhergehenden Zeitpunkt tn vorherzusagen, wobei die Abschätzung für die eine oder die mehreren Zustandsvariablen zum Zeitpunkt tn aus einem gemessenen Wert von dem empfangenen Signal zum Zeitpunkt tn und aus einer Vorhersage eines Wertes von der einen oder den mehreren Zuständen zum Zeitpunkt tn berechnet wird.

15. System nach einem der Ansprüche 8 bis 14, das ein Mittel umfaßt, um ein Alarmsignal zu erzeugen, wenn festgestellt wird, daß das Objekt gefährlich ist.

**Revendications**

1. Procédé de discrimination d'un objet (2b) qui présente un danger pour un véhicule (12), d'un objet qui ne présente pas de danger pour le véhicule, dans un système radar à véhicule routier capable de détecter la présence d'un ou plusieurs objets à proximité d'un véhicule (12) qui se déplace dans une première voie de circulation; le procédé comprenant les étapes de production d'un faisceau radar ayant une largeur de faisceau suffisante pour irradier un objet (26) situé dans une deuxième voie (10) adjacente à la première voie, au moins une partie du faisceau radar étant produite le long d'un premier axe (20) sensiblement perpendiculaire à la direction de déplacement du véhicule (12); et réception d'un signal réfléchi en provenance d'un objet irradié; caractérisé par l'estimation, à partir du signal réfléchi reçu, de la vitesse de l'objet irradié par rapport à la vitesse du véhicule dans la direction d'un deuxième axe (x) sensiblement parallèle à la direction de déplacement du véhicule; mesure de la vitesse du véhicule en utilisant au moins un capteur de vitesse; détermination du fait que l'objet irradié est dangereux si la somme de la vitesse mesurée du véhicule et de la vitesse estimée de l'objet parallèle est supérieure à un seuil prédéterminé ; et détermination du fait que l'objet irradié n'est pas dangereux si la somme de la vitesse mesurée du véhicule et de la vitesse estimée de l'objet parallèle est inférieure à un seuil prédéterminé.

2. Procédé selon la revendication 1, dans lequel l'étape de production d'un faisceau radar utilise une antenne (29) de radar qui est montée à affleurement sur au moins un côté du véhicule (12).

3. Procédé selon la revendication 1 ou 2, dans lequel l'étape d'estimation comporte l'utilisation d'un filtre de Kalman.

4. Procédé selon la revendication 3, dans lequel le filtre de Kalman est un filtre de Kalman non linéaire étendu.

5. Procédé selon la revendication 3 ou 4, dans lequel le filtre de Kalman comporte l'étape de calcul d'une estimation initiale pour une ou plusieurs variables d'état qui décrivent le déplacement de l'objet (26) à un instant t0, sur la base d'une valeur mesurée à partir du signal reçu à l'instant t0.

6. Procédé selon la revendication 5, dans lequel le filtre de Kalman comporte les étapes de prédiction d'une valeur pour les un ou plusieurs états à un instant tn+1 sur la base d'une estimation pour les une ou plusieurs variables d'état à un temps précédent tn, dans lequel l'estimation pour les une ou plusieurs variables d'état à l'instant tn est calculée à partir d'une valeur mesurée à partir du signal reçu à l'instant tn et d'une prédiction d'une valeur des un ou plusieurs états à l'instant tn.

7. Procédé selon l'une quelconque des revendications précédentes, comprenant l'étape de génération d'un signal d'alarme si l'objet est déterminé comme étant aléatoire.

8. Système de radar de véhicule pour détecter la présence d'un ou plusieurs objets (26) à proximité d'un véhicule (12) qui se déplace dans une première voie de circulation, et pour discriminer un objet qui présente un danger pour le véhicule, d'un objet qui ne présente pas de danger pour le véhicule, le système comprenant un générateur (52, 54) de signal radar; une antenne (44), couplée au générateur de signal radar pour produire un faisceau radar ayant une largeur de faisceau suffisante pour irradier un objet situé dans une deuxième voie adjacente à la première voie, au moins une partie du faisceau radar pouvant être produite le long d'un premier axe (20) sensiblement perpendiculair à la direction de déplacement du véhicule; et un récepteur (46, 62) couplé à l'antenne pour recevoir un signal réfléchi par un objet irradié; caractérisé par un moyen d'estimation (32) pour estimer, à partir du signal réfléchi reçu, la vitesse de l'objet irradié dans la direction d'un deuxième axe (x) sensiblement parallèle à la direction de déplacement du véhicule; un capteur pour mesurer la vitesse du véhicule; et un comparateur couplé au moyen d'estimation et au capteur pour déterminer que l'objet irradié est dangereux si la somme de la vitesse mesurée du véhicule et de la vitesse estimée de l'objet parallèle est supérieure à un seuil prédéterminé et pour déterminer que l'objet irradié n'est pas dangereux si la somme de la vitesse mesurée du véhicule et de la vitesse estimée de l'objet parallèle est inférieure à un seuil prédéterminé.

9. Système selon la revendication 8, dans lequel la largeur de faisceau du faisceau radar est supérieure à 5 - 10 degrés.

10. Système selon la revendication 8 ou 9, dans lequel l'antenne (42, 44) est destinée à être montée à affleurement sur au moins un côté d'un véhicule.

11. Système selon la revendication 8, 9 ou 10, dans lequel le moyen d'estimation comporte un filtre de Kalman.

12. Système selon la revendication 11, dans lequel le filtre de Kalman est un filtre de Kalman non linéaire étendu.

13. Système selon la revendication 11 ou 12, dans lequel le filtre de Kalman comporte un moyen pour calculer une estimation initiale pour une ou plusieurs variables d'état qui décrivent le déplacement de l'objet à un instant t0, sur la base d'une valeur mesurée à partir du signal reçu à l'instant t0.

14. Système selon la revendication 13, dans lequel le filtre de Kalman comporte un moyen pour prédire une valeur pour les un ou plusieurs états à un instant tn+1 sur la base d'une estimation pour les une ou plusieurs variables d'état à un instant précédent tn, dans lequel l'estimation pour les une ou plusieurs variables d'état à l'instant tn est calculée à partir d'une valeur mesurée à partir du signal reçu à l'instant tn et d'une prédiction d'une valeur des un ou plusieurs états à l'instant tn.

15. Système selon l'une quelconque des revendications 8 à 14, comprenant un moyen pour générer un signal d'alarme si l'objet est déterminé comme étant dangereux.

FIG. 1

FIG. 2

FIG. 3a

EP 0 699 924 B1

FIG. 3b

70 RANGING DATA STORAGE REGISTERS (I, Q inputs) → 72 FFT FOR EACH SET OF DATA IN EACH RANGE BIN → 74 RANGE AND DOPPLER (RANGE RATE) MATRIX FOR THE DETECTION ZONE → 76 DETECTION PROCESSOR → RANGE, RANGE RATE

FIG. 4

28, 28 → 30 MICROWAVE SENSOR → RANGE, RANGE RATE → 32 VELOCITY ESTIMATOR SIGNAL PROCESSING → $V_{tgtx}$ → 34 DISCRIMINATOR ← $V_{px}$ → 36 ALARM

DETECTION ZONES FOR TARGETS
$1m^2$, $10m^2$, $30m^2$ RCS

RCS = $1m^2$

RCS = $30m^2$

38

40

RCS = $10m^2$

FIG. 5